# EUROPÄISCHE PATENTSCHRIFT

(11) **EP 1 289 809 B1**
(45) Veröffentlichungstag und Bekanntmachung des Hinweises auf die Patenterteilung: **23.05.2007**
(21) Anmeldenummer: 01929317.4
(22) Anmeldetag: 05.04.2001
(51) Int. Cl.: B60T 8/00, B60C 23/06, B60C 23/04

(54) **SENSORSYSTEM ZUR ERFASSUNG VON MESSGRÖSSEN AN EINEM ROTIERENDEN GEGENSTAND**
SENSOR SYSTEM FOR DETECTING VARIABLES TO BE MEASURED ON A ROTATING OBJECT
SYSTEME DE CAPTEURS POUR LA DETECTION DE GRANDEURS A MESURER SUR UN OBJET TOURNANT

(30) Priorität: 23.05.2000 DE 10025502
(43) Veröffentlichungstag der Anmeldung: 12.03.2003
(73) Patentinhaber: ROBERT BOSCH GMBH, 70442 Stuttgart (DE)
(72) Erfinder: ELSNER, Bernhard, 65597 Huenfelden (DE); HEIDEMEYER, Henry, 70825 Korntal (DE)
(86) Internationale Anmeldenummer: PCT/DE2001/001323
(87) Internationale Veröffentlichungsnummer: WO 2001/089896

(56) Entgegenhaltungen:
- EP-A- 0 937 615
- WO-A-93/25400

## Beschreibung

Die vorliegende Erfindung betrifft ein Sensorsystem zur Fernerfassung wenigstens einer.Meßgröße, die an einem rotierenden Gegenstand gemessen wird.

### Stand der Technik

Die Fernabfragbarkeit eines Sensors ist in vielen Anwendungsbereichen erforderlich, insbesondere dort, wo es problematisch ist, eine dauerhafte körperliche Verbindung zwischen einem Sensor und einer zugehörigen Auswerteeinheit herzustellen, über die Ausgangssignale des Sensors zu der Auswerteeinheit übertragen werden können. Solche Verbindungsprobleme treten überall dort auf, wo der Sensor relativ zu der zugehörigen Auswerteeinheit bewegt ist, insbesondere bei Drehbewegungen. Als Beispiele hierfür können die Erfassung des Drucks in einem an einem Fahrzeug drehbar montierten Luftreifen oder die Messung des Drehmoments auf einer rotierenden Welle dienen.

Diese Anwendungen erfordern die Übertragung von Ausgangssignalen des Sensors auf elektromagnetischem Wege im allgemeinsten Sinne, d. h. die Übertragung von Funk-, Mikrowellen- oder Lichtsignalen. Eine Möglichkeit hierfür ist, das Sensorelement mit einer eigenen Stromversorgung auszurüsten, um die Energie bereitzustellen, die für die Messung und die Übertragung der Ausgangssignale benötigt wird. Dieses Prinzip stößt jedoch schnell an seine Grenzen durch die entstehenden Kosten (Batterie), das relativ hohe Gewicht der Sensoreinheit und die notwendige Wartung, da ein Tausch der Batterie nach einer bestimmten Betriebszeit notwendig ist.

Es ist daher wünschenswert, den Sensor vollkommen passiv, d. h., ohne eigene Stromversorgung zu realisieren, um die Probleme im Zusammenhang mit der Batterie zu umgehen und den Sensor kleiner, leichter und unempfindlicher zu machen.

Ein Beispiel für ein Sensorsystem mit auf elektromagnetischem Wege fernabfragbaren Sensoren ist in DE 19 702 768 C1 behandelt. Das aus dieser Schrift bekannte Sensorsystem umfaßt:
- einen an dem rotierenden Gegenstand angeordneten, für die Meßgröße empfindlichen Sensor und Mittel zum Weiterleiten der Signale des Sensors zu einer Verarbeitungseinrichtung, wobei diese Mittel eine Antennenanordnung zum Versorgen des wenigstens einen Sensors mit Hochfrequenzenergie und zum Empfangen eines abhängig von der zu erfassenden Größe modulierten Hochfrequenzsignals von dem Sensor umfassen.

Dieses Sensorsystem ist geeignet, um Meßgrößen an dem rotierenden Gegenstand zu erfassen, die im wesentlichen an dem gesamten Gegenstand konstant sind, so daß es auf den genauen Ort einer Messung nicht ankommt.

Wenn es jedoch darum geht, Meßgrößen zu erfassen, deren Werte nicht an dem zu messenden Gegenstand gleichförmig sind, stößt das bekannte Sensorsystem schnell an seine Grenzen. Zwar sind Messungen an Teilbereichen des rotierenden Gegenstandes noch durchführbar, wenn diese gemeinsam mit dem Gegenstand rotieren, wenn also der Sensor an dem interessierenden Teilbereich angeordnet und mit diesem gemeinsam rotieren kann; wenn es jedoch darum geht, Meßgrößen in einem Teilbereich des rotierenden Gegenstandes zu erfassen, der bezogen auf ein nicht mit dem Gegenstand rotierendes Koordinatensystem ortsfest ist, so ist das bekannte System überfordert.

Ein Sensorsystem gemäß dem Oberbegriff von Anspruch 1 ist aus der Druckschrift EP 0 937 615 A bekannt.

### Vorteile der Erfindung

Durch die vorliegende Erfindung wird ein Sensorsystem zum Erfassen von wenigstens einer Meßgröße an einem rotierenden Gegenstand geschaffen, das es auf einfache Weise ermöglicht, eine Meßgröße an einem Teilbereich des rotierenden Gegenstandes zu erfassen, der in Bezug auf ein nicht mit dem Gegenstand rotierendes Koordinatensystem ortsfest ist.

Diese Vorteile werden dadurch erreicht, daß an dem rotierenden Gegenstand mehrere Sensoren in Umfangsrichtung verteilt angeordnet sind, und daß die Antennenanordnung eine Richtcharakteristik für das Senden und/oder den Empfang hat, die bezogen auf das nicht rotierende Koordinatensystem ortsfest ist und die nur den Teilbereich des Gegenstandes einschließt.

Im Laufe der Drehung des Gegenstandes durchlaufen eine Vielzahl der an ihm angeordneten Sensoren nacheinander den Teilbereich, wo sie mit der Antennenanordnung in Wechselwirkung treten können. Dies bedeutet, daß die betreffenden Sensoren nur dann, wenn sie sich in dem Teilbereich befinden, mit Hochfrequenzenergie versorgt werden, die es ihnen ermöglicht, ihrerseits ein Antwort-Funksignal abzustrahlen, und/oder daß ein von den Sensoren abgestrahltes Antwort-Funksignal von der Antennenanordnung nur dann empfangen wird, wenn der betreffende Sensor sich in dem Teilbereich befindet.

Bei dem Teilbereich kann es sich vorteilhafterweise um eine Kontaktfläche des Gegenstandes mit einer Unterlage handeln. So ist es z. B. möglich, Kontaktkräfte, die zwischen dem Gegenstand und der Unterlage wirken, zu messen, während der Gegenstand über die Unterlage rollt.

Um das System einfach und kompakt zu halten, ist bevorzugt, daß die Antennenanordnung eine gemeinsame Antenne für das Senden von Hochfrequenzenergie an die Sensoren als auch für den Empfang eines Antwortsignals von den Sensoren umfaßt.

Sensoren, die zur Erfassung einer gleichen physikalischen Größe dienen, können in Umfangsrichtung des Gegenstandes zweckmäßigerweise einen Abstand haben, der im wesentlichen der Ausdehnung des Teilbereichs in Umfangsrichtung entspricht. Auf diese Weise ist sichergestellt, daß sich im Laufe der Drehung des Gegenstandes jederzeit ein Sensor für die betreffende Meßgröße in dem Teilbereich befindet, so daß eine kontinuierliche Messung der Meßgröße gewährleistet ist.

Besonders bevorzugt ist, daß die Sensoren eine Kodierung aufweisen, die es ermöglicht, unter einer Mehrzahl von in dem Teilbereich befindlichen Sensoren selektiv wenigstens einen Sensor mit Hochfrequenzenergie zu versorgen oder selektiv von wenigstens einem in dem Teilbereich befindlichen Sensor zu empfangen. Eine solche Maßnahme erlaubt es, die Sensoren am Umfang des rotierenden Körpers dichter zu staffeln, als es der Ausdehnung des Teilbereichs in Umfangsrichtung entspricht; da die Sensoren jedoch selektiv abgefragt werden können, kann die Meßgröße mit einer Ortsauflösung bestimmt werden, die feiner als die Ausdehnung des Teilbereiches ist.

Eine besonders einfache Identifizierung der Sensoren ist dann gegeben, wenn die Sensoren n Gruppen bilden, die jeweils zyklisch auf den Umfang des Gegenstandes verteilt sind.

Um eine eindeutige Zuordnung der von den einzelnen Sensoren gelieferten Meßwerte zu gewährleisten, ist bevorzugt, daß der Teilbereich so begrenzt ist, daß niemals Sensoren aller n Gruppen sich gleichzeitig darin befinden.

Zweckmäßig ist ferner, daß jeder Sensor einen ersten Resonator aufweist, der durch eine der Trägerfrequenz der Hochfrequenzenergie aufmodulierte Meßfrequenz anregbar ist und dessen Resonanzfrequenz in Abhängigkeit von der Meßgröße variabel ist. Diese Resonanzfrequenz kann einem Antwort-Funksignal aufmoduliert werden, das der Sensor an die Antennenanordnung aussendet, so daß eine an die Antennenanordnung angeschlossene Verarbeitungseinrichtung aus der Modulationsfrequenz auf den Wert der zu erfassenden Meßgröße rückschließen kann.

Dieser Resonator umfaßt vorzugsweise als schwingfähiges Element einen Oberflächenwellenresonator oder einen Schwingquarz. Ferner ist vorzugsweise ein für die Meßgröße sensitives diskretes Bauelement in den ersten Resonator einbezogen, was es ermöglicht, als schwingfähiges Element preiswerte Standardbauelemente zu verwenden.

Die Verwendung von Resonatoren mit in Abhängigkeit von der Meßgröße variabler Resonanzfrequenz hat ferner den Vorteil, daß die oben erwähnte Kodierung dadurch realisiert werden kann, daß jedem Sensor des Sensorsystems ein spezifischer Resonator-Abstimmbereich zugeordnet wird. Dies erlaubt es, anhand der Modulationsfrequenz des an der Antennenanordnung von einem Sensor kommend empfangenen Antwort-Funksignals auf die Identität des sendenden Sensors rückzuschließen.

Wenn sich die Abstimmbereiche der einzelnen ersten Resonatoren verschiedener Sensoren teilweise überlappen, so kann eine Zuordnung des empfangenen Antwort-Funksignals unter Berücksichtigung auch der Empfangsfeldstärke an der Antennenanordnung getroffen werden. Eine einfachere Zuordnung ergibt sich jedoch, wenn die Resonator-Abstimmbereiche der einzelnen Kodierungen disjunkt sind.

Eine bevorzugte Anwendung des erfindungsgemäßen Sensorsystems ist die Erfassung von vektoriellen Meßgrößen, insbesondere von Kräften oder Beschleunigungen. Wenn der rotierende Gegenstand z. B. ein Fahrzeugreifen ist, können durch die Erfassung solcher Größen Gefahrensituationen wie etwa Aquaplaning, zu geringe Bodenhaftung einzelner Räder des Fahrzeugs beim Durchfahren von Kurven etc. erfaßt und eine diesbezügliche Warnmeldung für den Fahrer des Fahrzeugs erzeugt werden.

In einem solchen Fall ist es häufig nicht notwendig, alle drei Komponenten der vektoriellen Größe zu erfassen; in den obengenannten Beispielfällen ist es ausreichend, wenn die Sensoren jeweils zur Erfassung von zwei zueinander senkrechten, zur Oberfläche des Gegenstandes tangentialen Komponenten der Meßgröße ausgelegt sind. Auf den Wert einer radial zum Reifen orientierten Komponente der vektoriellen Größe kann durch Messung beispielsweise des Reifendrucks geschlossen werden. Es ist deshalb nicht erforderlich, Sensoren für die radiale Komponente der vektoriellen Größe auf dem Umfang des Reifens zu verteilen; es ist ausreichend, wenn ein einzelnen Sensor für den Reifendruck vorhanden ist.

Ferner ist es vorteilhaft, daß jeder Sensor einen durch eine Trägerfrequenz der Hochfrequenzenergie anregbaren zweiten Resonator aufweist. Dieser zweite Resonator erlaubt es, die Hochfrequenzenergie für eine begrenzte Zeit zu speichern, so daß sie zur Erzeugung des Antwort-Funksignals zur Verfügung steht. Dies hat zum einen den Vorteil, daß der Sensor zum Erzeugen des Antwort-Funksignals nicht auf die gleichzeitige Aussendung der Hochfrequenzenergie durch die Antennenanordnung angewiesen ist, weil der zweite Resonator während einer Pause der Hochfrequenzenergie-Versorgung in der Lage ist, die zum Senden des Antwort-Funksignals notwendige Energie zu liefern. Da die Hochfrequenzenergie-Versorgung pausieren kann, ist es bequem möglich, eine gleiche Antenne jeweils zeitversetzt zum Versorgen der Sensoren mit der Hochfrequenzenergie und zum Empfangen ihrer Antwort-Funksignale einzusetzen. So ermöglicht es der erste Resonator, den Sensor als ein passives Element ohne eigene Stromversorgung zu bauen.

Ein weiterer Vorteil der Verwendung des zweiten Resonators ist, daß er eine selektive Anregung einzelner Sensoren durch ein Abfrage-Funksignal mit auf den zweiten Resonator abgestimmter Trägerfrequnez ermöglicht, beziehungsweise daß er in einer Umgebung, in der einer Mehrzahl von Abfrageeinheiten jeweils wenigstens ein Sensor zugeordnet ist, jeder Abfrageeinheit und den ihr zugeordneten Sensoren eine spezifische Trägerfrequenz zugeteilt werden kann, die es den Abfrageeinheiten ermöglicht, selektiv nur die ihnen zugeordneten Sensoren anzusprechen und abzufragen.

Als zweiter Resonator sind insbesondere Oberflächenwellen-Resonatoren bevorzugt.

Besonders vorteilhaft sind solche Oberflächenwellen-Resonatoren, die in der Lage sind, in Reaktion auf einen Anregungs-Schwingungsimpuls einen zeitlich verzögerten Ausgangs-Schwingungsimpuls zu erzeugen. Solche Resonatoren können während eines ersten Zeitintervalls, das kürzer als die Verzögerung im zweiten Resonator sein sollte, zu einer Schwingung angeregt werden; die in dieser Schwingung gespeicherte Energie steht aber erst dann als Antriebsenergie für den Sensor zur Verfügung, wenn die Hochfrequenzenergie-Versorgung durch die Antennenanordnung pausiert. Solange die Verzögerung andauert, wird die Energie in dem zweiten Resonator mit geringen, durch die Schwingungsdämpfung des Resonatorsubstrats bedingten Verlusten gespeichert.

Eine solche Verzögerung kann auf einfache Weise mit Hilfe einer Ausbreitungsstrecke für die Oberflächenwelle erreicht werden, die von einer in dem Resonator angeregten Oberflächenwelle zurückgelegt werden muß, bevor sie abgegriffen wird.

Solche Resonatoren können zum Beispiel als Oberflächenwellen-Filter mit einem ersten Elektrodenpaar zum Anregen der Oberflächenwelle und einem räumlich beabstandeten zweiten Elektrodenpaar zum Abgreifen der Oberflächenwelle ausgebildet sein, wobei die zwei Elektrodenpaare durch die Ausbreitungsstrecke voneinander getrennt sind.

Alternativ können sie als Resonatoren mit einem einzigen Elektrodenpaar ausgebildet sein, wobei das einzige Elektrodenpaar sowohl zum Anregen als auch zum Abgreifen der Oberflächenwelle dient, wobei jeweils Reflektorelektroden in einem Abstand von dem Elektrodenpaar angeordnet sind, um die sich in dem Substrat des Resonators ausbreitende Oberflächenwelle mit einer Zeitverzögerung zu dem Elektrodenpaar zu reflektieren.

Weitere Merkmale und Vorteile der Erfindung ergeben sich aus der nachfolgenden Beschreibung von Ausführungsbeispielen mit Bezug auf die beigefügten Figuren.

### Figuren

Es zeigen:
- Fig. 1: eine schematische Ansicht eines Fahrzeugrades, das mit einem erfindungsgemäßen Sensorsystem gemäß einem ersten Ausführungsbeispiel ausgestattet ist;
- Fig. 2: eine schematische Ansicht eines Fahrzeugrades mit einem Sensorsystem gemäß einem zweiten Ausführungsbeispiel;
- Fig. 3: ein Blockdiagramm eines Sensors des Fahrzeugrades aus Figur 1;
- Fig. 4: ein Blockdiagramm einer Abfrageeinheit für den Sensor aus Fig. 2;
- Fig. 5: den zeitlichen Verlauf der Intensitäten der Funksignale an der Antennenanordnung der Abfrageeinheit aus Fig. 3;
- Fig. 6: ein erstes Beispiel für den Aufbau eines Oberflächenwellenresonators, der als zweiter Resonator für einen Sensor wie den Sensor aus Fig. 2 geeignet ist;
- Fig. 7: ein zweites Beispiel für den Aufbau eines Oberflächenwellenresonators; und
- Fig. 8: den zeitlichen Verlauf der Intensitäten der Funksignale an der Antennenanordnung bei Verwendung eines zweiten Resonators des in Figur 5 oder 6 dargestellten Typs.

### Beschreibung der Ausführungsbeispiele

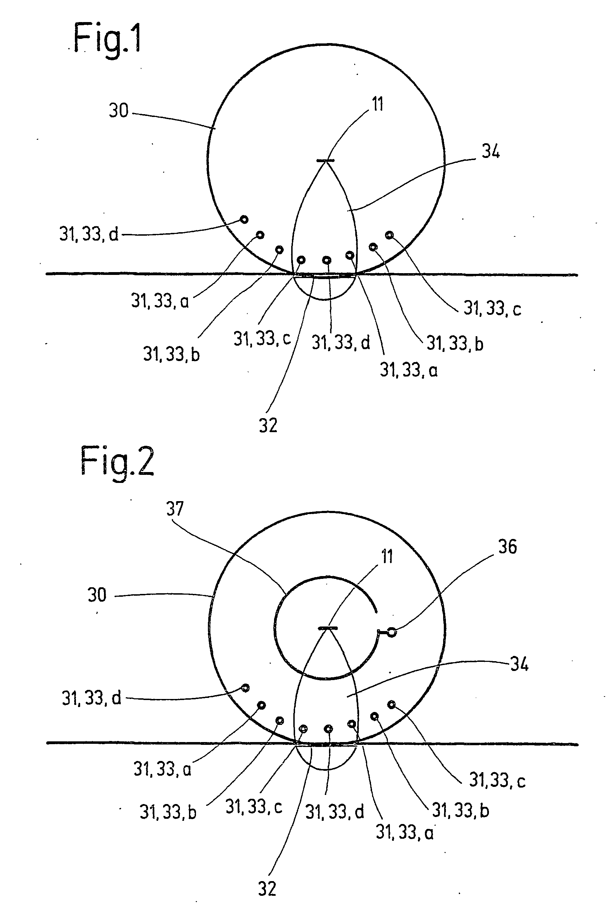

Fig. 1 zeigt ein erstes Beispiel eines Fahrzeugrades mit einem Luftreifen 30, das mit einem erfindungsgemäßen Sensorsystem ausgestattet ist. Auf der Lauffläche des Luftreifens ist eine Vielzahl von Sensoren 33 angeordnet; sie können z. B. in die Profilelemente des Luftreifens eingebettet oder im Bereich des (Stahl-)Mantels angeordnet sein.

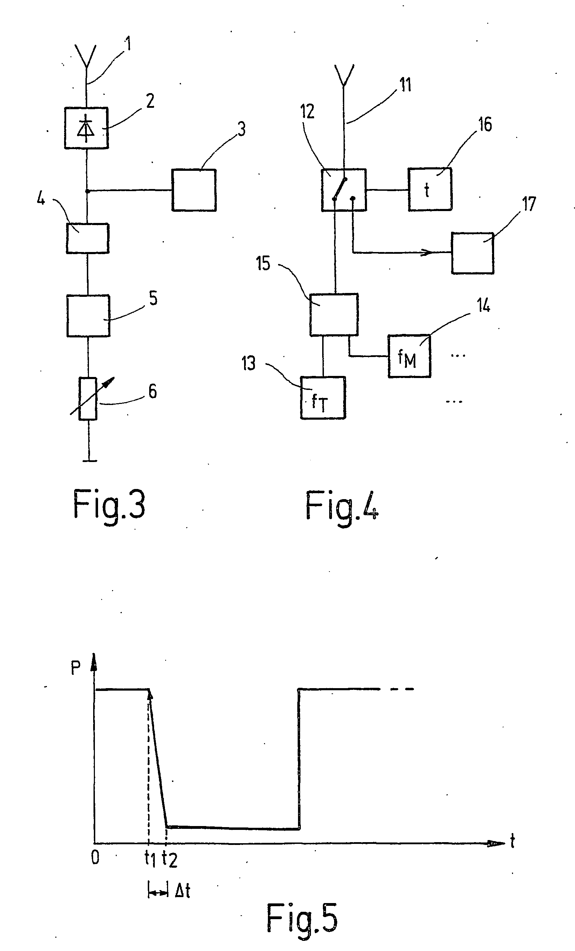

Dabei kann es sich bei den Sensoren 33 um kapazitive oder induktive Sensoren handeln, auf deren Aufbau und Arbeitsweise im folgenden anhand der Figuren 3 fortfolgende noch genauer eingegangen wird.

Die Sensoren 33 sind vorgesehen, um die Verformung des Profils des Luftreifens 30 an einem Teilbereich des Luftreifens 30, nämlich seiner abgeplatteten Kontaktfläche 32 zur Straße, zu messen.

Eine Antenne 11 ist in der Nähe der Achse des Rades angeordnet und hat eine auf den abgeplatteten Bereich 32 orientierte Richtcharakteristik, hier durch die Keule 34 dargestellt.

Die Antenne 11 ist Teil einer Abfrageeinheit, die in Figur 4 als Blockdiagramm dargestellt ist. In der Abfrageeinheit befindet sich ein Oszillator 13, der ein Signal, hier als Abfrage-Trägersignal bezeichnet, mit einer Trägerfrequenz f_{T} im Bereich von 2,54 GHz erzeugt. Die Trägerfrequenz ist vorzugsweise um einige MHz gezielt variierbar. Ein zweiter Oszillator 14 erzeugt ein Abfrage-Meßsignal in Form einer Schwingung mit einer Frequenz f_{M} im Bereich von 0 bis 80 MHz. Wenn die Abfrageinheit zum Abfragen mehrerer Sensoren eingesetzt wird, ist die Meßfrequenz f_{M} zweckmäßigerweise ebenfalls gezielt variierbar, und zwar in Schritten, die der Größe des Resonanzbereichs eines ersten Resonators der Sensoren entsprechen, auf den an späterer Stelle noch eingegangen wird.

Ein Modulator 15 ist an die zwei Oszillatoren 13, 14 angeschlossen und moduliert das Abfrage-Meßsignal auf das Abfrage-Trägersignal auf und erzeugt so ein Abfrage-Funksignal, das an einen Schalter 12 ausgegeben wird. Der Schalter 12 steht unter der Kontrolle eines Zeitgebers 16, der eine Sende-Empfangsantenne 11 abwechselnd mit dem Ausgang des Modulators 15 und dem Eingang einer Demodulations- und Meßschaltung 17 verbindet, die eine Verarbeitungseinrichtung zum Extrahieren der Werte der zu erfassenden Meßgrößen aus den empfangenen Antwort-Funksignalen darstellt. Die vom Modulator 15 ausgeführte Modulation kann insbesondere eine Amplitudenmodulation oder eine Quadraturmodulation sein; die in der Demodulations- und Meßschaltung 17 stattfindende Demodulation ist komplementär dazu.

Der Aufbau der Sensoren 33 ist in Figur 3 anhand eines Blockdiagramms dargestellt. Das von der Antenne 11 abgestrahlte Abfrage-Funksignal wird von einer Antenne 1 des in Figur 3 gezeigten Sensors empfangen. An die Antenne ist eine Demodulationsdiode 2, zum Beispiel eine Schottky- oder Detektordiode angeschlossen. Eine solche Diode zeichnet sich durch eine bereits in der Nähe des Koordinatenursprungs im wesentlichen parabelförmige Kennlinie und damit durch ein stark nichtlineares Verhalten aus, das zu einer Mischung der im Abfrage-Funksignal enthaltenen Spektralanteile und damit zur Erzeugung einer spektralen Komponente mit der Frequenz f_{M} des Meßsignals am Ausgang der Demodulationsdiode 2 führt. Der ebenfalls am Ausgang der Demodulationsdiode 2 erscheinende spektrale Anteil mit der Trägerfrequenz f_{T} dient zur Anregung eines Resonators 3, hier als zweiter Resonator bezeichnet.

An den Ausgang der Demodulationsdiode 2 ist ferner ein Tiefpaßfilter 4 und, hinter dem Tiefpaßfilter 4 ein sogenannter erster Resonator 5 angeschlossen, der zusammen mit einem für die Meßgröße sensitiven Element 6 einen Schwingkreis bildet. Der erste Resonator 5 ist genauso wie der zweite Resonator 3 ein kommerziell verfügbares Bauelement, zum Beispiel ein Schwingquarz oder ein Oberflächenwellenresonator. Durch die Zusammenschaltung mit dem sensitiven Element 6 ist die Resonanzfrequenz des ersten Resonators 5 in Abhängigkeit von der Meßgröße variabel.

Der Zweck des Tiefpaßfilters 4 liegt im wesentlichen darin, spektrale Anteile im Bereich der Trägerfrequenz f_{T} von dem ersten Resonator 5 fernzuhalten und deren Dissipation im ersten Resonator 5 so zu verhindern. Auf diese Weise bewirkt der Tiefpaßfilter 4 zum einen eine effektivere Anregung des zweiten Resonators 3, solange das Abfrage-Funksignal von der Antenne 1 empfangen wird; wenn das Abfrage-Funksignal pausiert, begrenzt der Tiefpaßfilter 4 die Dämpfung des zweiten Resonators 3.

Das sensitive Element 6 ist ein induktives oder kapazitives Element, zum Beispiel ein mikromechanisches Drucksensorelement mit zwei relativ zueinander in Abhängigkeit von einer einwirkenden Kraft oder Beschleunigung beweglichen Kondensatorplatten. Ein solches Element 6 beeinflußt im wesentlichen nur die Resonanzfrequenz, nicht aber die Dämpfung des ersten Resonators 5.

Da ein solcher Sensor jeweils nur für eine Kraft- oder Beschleunigungskomponente in einer Raumrichtung empfindlich ist, sind bei dem Luftreifen 30 aus Figur 1 an jeder Umfangsposition 31 jeweils drei Sensoren 33 vorgesehen, zwei für die zur Oberfläche des Luftreifens tangentialen Richtungen, in Fahrtrichtung und quer dazu, und ein dritter für die radiale Richtung.

Fig. 5 veranschaulicht schematisch den Verlauf der Empfangsfeldstärke P an der Antenne 11 der Abfrageeinheit als Funktion der Zeit t im Laufe eines Abfragezyklus. Die Empfangsfeldstärke P ist mit einem logarithmischen Maßstab aufgetragen. Während eines Zeitraums t = 0 bis t = t₁ wird das Abfrage-Funksignal ausgestrahlt, es ist somit zwangsläufig um Größenordnungen stärker als aus der Umgebung der Abfrageeinheit zurückgeworfene Echosignale oder ein eventuell von einem Sensor geliefertes Antwortsignal.

Am Zeitpunkt t₁ verbindet der Schalter 12 die Antenne 11 mit der Demodulations- und Meßschaltung 17, und die Ausstrahlung des Abfrage-Funksignals wird unterbrochen. Während eines kurzen Zeitraums [t₁, t₂] treffen an der Antenne 11 Echos des Abfrage-Funksignals ein, die von Hindernissen in unterschiedlichen Abständen in der Umgebung der Antenne 11 zurückgeworfen werden.

Nachdem diese Echosignale abgeklungen sind, trifft an der Antenne 11 nur noch ein Antwort-Funksignal ein, das im Sensor 33 durch Mischen der Schwingungen der zwei Resonatoren 3, 5 in der jetzt als Modulator fungierenden Diode 2 erzeugt worden und über die Antenne 1 abgestrahlt worden sind. Die Demodulations-Meßschaltung 17 wartet daher nach dem Umschalten des Schalters 12 noch eine vorgegebene Zeitspanne Δt ab, bevor sie beginnt, das von der Antenne 11 empfangene Antwortsignal auf Frequenz und/oder Dämpfung zu untersuchen und so die darin enthaltene Information über die Meßgröße zu extrahieren.

Die Verzögerung Δt kann in Abhängigkeit von der Sende- und Empfangsleistung der Abfrageeinheit fest vorgegeben sein, zum Beispiel in dem Sinne, daß für eine gegebene Bauart der Abfrageeinheit eine maximale Reichweite bestimmt wird, aus der Echosignale noch durch die Abfrageeinheit nachweisbar sind, und die Verzögerung Δt wenigstens gleich dem Zweifachen der Laufzeit gewählt wird, die dieser Reichweite entspricht.

Da während der Verzögerungszeit Δt aber auch die Schwingungen der Resonatoren 3 und 5 abklingen, ist es vorteilhafter, die Verzögerungszeit Δt in Abhängigkeit von der jeweiligen Einsatzumgebung der Abfrageeinheit so kurz wie möglich zu wählen, indem zum Beispiel für eine konkrete Einsatzumgebung die maximale Entfernung einer potentiellen Echoquelle von der Abfrageeinheit bestimmt wird und die Verzögerung wenigstens gleich der zweifachen Signallaufzeit vom Sensorelement zur Abfrageeinheit und damit gerade so groß gewählt wird, daß ein Echo von dieser Quelle nicht ausgewertet wird. Bei dem in Figur 1 dargestellten Sensorsystem kann als Verzögerungszeit Δt zum Beispiel die Zeit gewählt werden, die der Laufzeit eines Funksignals von der Antenne 11 zur Fahrbahn im Bereich des abgeplatteten Bereichs 32 und zurück zur Antenne 11 entspricht.

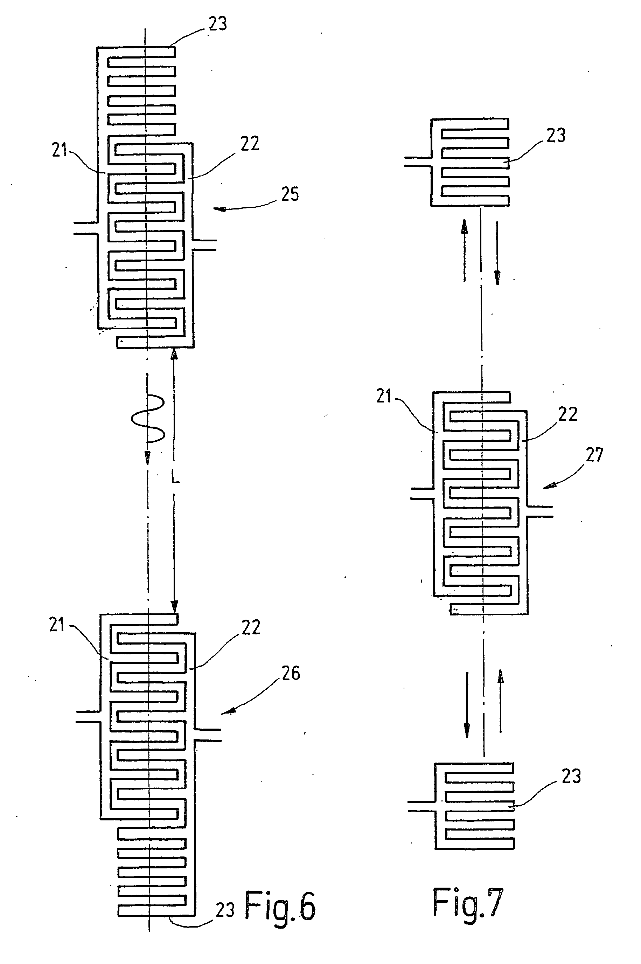

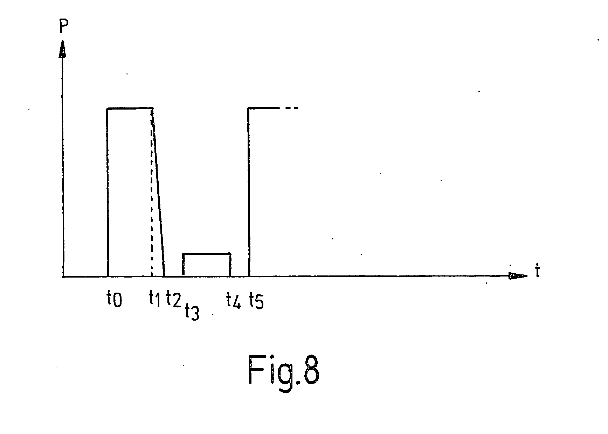

Figur 8 ist eine schematische Darstellung des Verlaufs der Empfangsfeldstärke P an der Antenne 11 der Abfrageeinheit als Funktion der Zeit t im Laufe eines Abfragezyklus, der sich ergibt, wenn ein Oberflächenwellenresonator der in Figur 6 oder 7 dargestellten Bauart als zweiter Resonator des Sensors eingesetzt wird, der zwei räumlich beabstandete Paare 25, 26 oder ein Paar 27 von Elektroden 21, 22 aufweist sowie eine Reflektorelektrode 23.

Während eines Zeitraums t = t₀ bis t = t₁ wird das Abfrage-Funksignal ausgestrahlt, genauso wie im Falle der Figur 5. Am Zeitpunkt t₁ wird die Ausstrahlung des Abfrage-Funksignals unterbrochen; die Empfangsfeldstärke P an der Antenne 11 nimmt in dem Maße ab, wie aus der Umgebung der Antenne 11 zurückgeworfene Echos des Abfrage-Funksignals abklingen.

Zum Zeitpunkt t₃= t₀ + τ (unter Vernachlässigung von Signallaufzeiten zwischen Abfrageeinheit und Sensor) beginnt die Oberflächenwelle, die in dem zweiten Resonator 3 während des Empfangs des Abfrage-Funksignals durch den Sensor angeregt worden ist, das Elektrodenpaar zu erreichen, an dem sie abgegriffen wird, so daß ab dem Zeitpunkt t₃ ein moduliertes Antwort-Funksignal am Sensor erzeugt wird. Indem die Ausdehnung des zweiten Resonators 3 bzw. die Verzögerung τ innerhalb dieses Resonators 3 groß genug gewählt wird, kann erreicht werden, daß zwischen dem Abklingen der Echos zum Zeitpunkt t₂. und dem Eintreffen des Antwort-Funksignals zum Zeitpunkt t₃ eine Empfangspause mit vernachlässigbarer Empfangsfeldstärke liegt, die durch die Demodulations- und Meßschaltung 17 der Abfrageeinheit erfaßbar ist und es dieser erlaubt, eindeutig zwischen Echo und Antwort-Funksignal zu unterscheiden. Zum Zeitpunkt t₄ = t₁ + τ hat die Oberflächenwellenschwingung das abgreifende Elektrodenpaar vollständig durchquert, und die Erzeugung des Antwort-Funksignals bricht ab.

Nach einer kurzen weiteren Verzögerung, zum Zeitpunkt t₅, beginnt mit der erneuten Ausstrahlung des Abfrage-Funksignals ein neuer Arbeitszyklus der Abfrageeinheit des Sensors.

Figur 2 zeigt eine weiterentwickelte Ausgestaltung des Sensorsystems aus Figur 1. Hier sind an jeder Position 31 an der Umfangsfläche des Reifens nur zwei Sensoren 33 angeordnet, die jeweils für Kraft beziehungsweise Beschleunigung in den zur Oberfläche des Luftreifens tangentialen Richtungen empfindlich sind. Ihr Aufbau ist der gleiche wie oben anhand der Figuren 1, 3, 5 oder 6 beschrieben.

Der in Figur 1 an jeder Position 31 vorhandene, für eine Kraft oder Beschleunigung in radialer Richtung empfindliche Sensor ist durch einen einzigen Sensor 36 ersetzt, der den dynamischen Innendruck des. Luftreifens mißt. Aus diesem Innendruck beziehungsweise seinen Veränderungen kann auf eine in radialer Richtung auf den Luftreifen 30 wirkende Kraft rückgeschlossen werden. Dieser Sensor 36 weist eine in Umfangsrichtung des Luftreifens 30 ausgedehnte Antenne 37 oder Antennenanordnung auf, von der in jeder Drehstellung des Luftreifens ein Teil innerhalb der Keule 34 der Antenne 11 liegt, so daß der Drucksensor 36 zu jedem beliebigen Zeitpunkt abgefragt werden kann.

Der einzelne Drucksensor 36 ersetzt somit sämtliche Sensoren für die in radialer Richtung wirkende Kraft oder Beschleunigung des Ausführungsbeispiels aus Figur 1. Dies erlaubt eine erhebliche Verringerung der Zahl der Sensoren im Vergleich zum Ausführungsbeispiel der Figur 1. Wenn man einen Umfang des Luftreifens 30 von circa 2 Meter und einen Abstand der Positionen 31 der einzelnen Sensoren von circa 10 cm zugrunde legt, so reduziert sich die Zahl der benötigten Sensoren von 3x20 = 60 im Falle des Ausführungsbeispiels der Figur 1 auf 2x20+1 = 41 im Falle der Figur 2.

Bei den in den Figuren 1 und 2 gezeigten Ausführungsbeispielen ist die Ausdehnung der Keule 34 in Umfangsrichtung und der Abstand der Sensorpositionen 31 so gewählt, daß sich zu jedem Zeitpunkt drei Positionen 31 innerhalb der Keule 34 befinden. Dies bedeutet, daß zu jedem Zeitpunkt neun beziehungsweise sieben Sensoren (sechs Sensoren 33 für die tangentialen Richtungen und der Drucksensor 36) durch das Abfrage-Funksignal der Antenne 11 angesprochen werden können. Für eine brauchbare Fernabfrage ist es notwendig, die Antwort-Funksignale, die von mehreren an einer gleichen Position angeordneten Sensoren ausgehen, unterscheiden zu können, und auch die von Sensoren an verschiedenen Positionen 31 gelieferten Antwort-Funksignale müssen unterscheidbar sein. Zu diesem Zweck ist eine Kodierung der Funksignale erforderlich. Eine Softwarecodierung ist hier unzweckmäßig, zum einen aufgrund der mit Ausführung eines Programms verbundenen Verarbeitungszeiten, zum anderen, weil die Sensoren die für eine solche Codierung benötigte Energie nur aus dem Abfrage-Funksignal gewinnen können, die Energie mithin knapp ist.

Es wird deshalb eine Codierung mit Hilfe der Träger- und Meßfrequenzen der zwischen der Antenne 11 und den Sensoren ausgetauschten Funksignale eingesetzt. Die auf dem Umfang des Luftreifens 30 verteilten Sensoren 33 sind jeweils in eine Mehrzahl von Gruppen aufgeteilt, bei den Beispielen der Figuren 1 und 2 ist diese Zahl willkürlich auf vier festgelegt, und die Positionen 31 sind je nach Zugehörigkeit ihrer Sensoren 33 zu einer der vier Gruppen in den Figuren 1 und 2 mit a, b, c oder d bezeichnet.

Einer ersten Variante zufolge ist die Trägerfrequenz f_{T} des Abfrage-Funksignals für alle Sensoren 33 gleich, und die zweiten Resonatoren 3 aller Sensoren 33 sind auf diese Trägerfrequenz f_{T} abgestimmt. Die ersten Resonatoren 5 weisen Abstimmbereiche auf, die innerhalb einer Gruppe je nach von dem Sensor 33 zu erfassender Meßgröße unterschiedlich sind, und die sich ferner von einer Gruppe zur anderen unterscheiden. Nimmt man zum Beispiel im Falle der Figur 2 an, daß die Abstimmbereiche der ersten Resonatoren 5 jeweils eine Breite von 10 MHz haben, so ist folgende Zuordnung von Abstimmbereichen zu Gruppen und Meßgrößen möglich:

| Gruppe | Kraft in Fahrtrichtung | Kraft in Querrichtung |
|---|---|---|
| a | 0-10 MHz | 40-50 MHz |
| b | 10-20 MHz | 50-60 MHz |
| c | 20-30 MHz | 60-70 MHz |
| d | 30-40 MHz | 70-80 MHz |

Die Abfrageeinheit ist somit in der Lage, durch Auswahl der Meßfrequenz selektiv nur die ersten Resonatoren einer Gruppe und innerhalb dieser Gruppe nur den ersten Resonator des Sensors 33, der einer bestimmten Meßgröße zugeordnet ist, anzuregen, so daß das im Anschluß an die Anregung erhaltene Antwort-Funksignal nur von dem auf diese Weise adressierten Sensor 33 kommen kann.

Selbstverständlich ist es auch möglich, dem Trägersignal eine Mehrzahl von Meßfrequenzen aufzumodulieren, so daß Antwort-Funksignale von mehreren Sensoren 33 gleichzeitig erhalten werden, und die Meßfrequenzen der sich zeitlich überlagernden Antwort-Funksignale in der Abfrageeinheit spektral zu zerlegen, um sie so den einzelnen Sensoren 33 beziehungsweise den von ihnen überwachten Meßgrößen zuzuordnen.

Eine weitere Möglichkeit ist, verschiedenen an einer gleichen Position 31 angeordneten, einer gleichen Gruppe zugehörigen Sensoren 33 unterschiedliche Trägerfrequenzen bei gleichen Abstimmbereichen der ersten Resonatoren 5 zuzuordnen. Auf diese Weise können von diesen Sensoren jeweils Antwort-Funksignale erhalten werden, die zwar gleiche Meßfrequenzen beziehungsweise genauer gesagt Meßfrequenzen innerhalb eines gleichen Abstimmbereichs aufweisen, die aber anhand ihrer unterschiedlichen Trägerfrequenzen in der Abfrageeinheit voneinander trennbar sind und so jeweils korrekt den zu erfassenden Meßgrößen zugeordnet werden können.

Wenn an einer Position 31 zwei Meßgrößen erfaßt werden sollen, kann es auch zweckmäßig sein, die Antennen 1 der Sensoren 33 polarisationsempfindlich zu konstruieren. So kann zum Beispiel die Antenne 1 eines Sensors 33, der eine Kraft in Fahrtrichtung erfaßt, nur für ein parallel zur Fahrtrichtung polarisiertes Abfrage-Funksignal empfindlich sein, und ein an der gleichen Position 31 angeordneter Sensor 33 zum Erfassen der Kraft quer zur Fahrtrichtung ist empfindlich für ein quer dazu polarisiertes Abfrage-Funksignal. Entsprechend unterscheiden sich die Polarisationen der von den zwei Sensoren 33 ausgestrahlten Antwort-Funksignale, so daß die Abfrageeinheit an der Polarisierung die Antwort-Funksignale zu unterscheiden vermag.

Während das Fahrzeug sich bewegt, sollen alle Sensoren des Rades fortlaufend abgefragt werden. Zu diesem Zweck kann gemäß einer einfachen Ausgestaltung die Keule 34 der Antenne 11 so bemessen werden, daß im wesentlichen immer nur eine Position 31 innerhalb der Keule liegt. Um eine Störung der Erfassung der Meßgröße durch am Rand der Keule 34 befindliche Sensoren zu vermeiden, ist hier eine sehr scharfe räumliche Begrenzung der Keule 34 erforderlich.

Einer vorteilhaften Alternative zufolge ist die Größe der Keule 34 der Antenne 11 in Umfangsrichtung des Luftreifens 30 einerseits so groß, daß stets mehrere Positionen 31 in dieser Keule 34 liegen, andererseits aber nicht so groß, als daß Sensoren aller Gruppen darin Platz finden könnten. Bei der in den Figuren 1 beziehungsweise 2 gezeigten Stellung des Rades kann die Abfrageeinheit jeweils Sensoren der Gruppen c, d und a anregen und Antwort-Funksignale von ihnen empfangen, Sensoren der Gruppe b liegen nicht in der Keule 34. Da die Gruppen a, b, c, d zyklisch aufeinanderfolgen, kann die Abfrageeinheit aus dem Fehlen eines Antwort-Funksignals der Gruppe b folgern, daß die Sensoren der Gruppen a und c sich in der Nähe des Randes des abgeplatteten Bereichs 32 befinden müssen und daß der Sensor der Gruppe d in der Mitte des abgeplatteten Bereichs 32 liegen muß. Am Rand des Bereichs 32 findet eine starke Walkbewegung des Materials des Luftreifens 30 statt, so daß die Sensoren der Gruppen a und c dadurch starken Kräften ausgesetzt sein können. Der Sensor der Gruppe d hingegen muß sich in der Mitte des abgeplatteten Bereichs 32 befinden, also dort, wo die Walkbewegung gering ist, die Kraftübertragung zwischen Luftreifen 30 und Fahrbahn aber am wirksamsten ist. Das von diesem Sensor gelieferte Antwort-Funksignal erlaubt somit den genauesten Rückschluß auf die Qualität der Bodenhaftung des Luftreifens. Die Abfrageeinheit identifiziert daher das Antwort-Funksignal des Sensors der Gruppe d anhand seiner charakteristischen Meßfrequenz und veranlaßt.beispielsweise die Ausgabe eines Warnsignals an den Fahrer des Fahrzeugs, wenn der momentane Wert dieser Meßfrequenz, der die vom Sensor der Gruppe d erfaßte Kraft repräsentiert, einen Sollbereich verläßt. Auf diese Weise kann der Fahrer gewarnt werden, noch bevor die Bodenhaftung des Fahrzeugs, zum Beispiel durch Aquaplaning oder Fahren auf eisglatter Fahrbahn, verlorengeht, und die Gefahr von Unfällen kann verringert werden.

## Patentansprüche

1. Sensorsystem zum Erfassen von wenigstens einer Meßgröße an einem rotierenden Gegenstand (30), mit wenigstens einem an dem rotierenden Gegenstand (30) angeordneten, für die Meßgröße empfindlichen Sensor und Mitteln zum Abgreifen von Meßsignalen von dem wenigstens einen Sensor und zum Weiterleiten der Signale zu einer Verarbeitungseinrichtung, welche eine Antennenanordnung (11) zum Versorgen des wenigstens einen Sensors mit Hochfrequenzenergie und zum Empfang eines abhängig von der zu erfassenden Größe modulierten Hochfrequenzsignals von dem Sensor umfassen, **dadurch gekennzeichnet, daß** mehrere solche Sensoren an dem Gegenstand (30) in Umfangsrichtung verteilt angeordnet sind, und daß die Antennenanordnung (11) eine Richtcharakteristik (34) für das Senden und/oder den Empfang hat, die bezogen auf ein nicht mit dem Gegenstand (30) rotierendes Koordinatensystem ortsfest ist und die nur einen. Teilbereich (32) des rotierenden Gegenstandes (30) einschließt.

2. Sensorsystem nach Anspruch 1, **dadurch gekennzeichnet, daß** der Teilbereich die Kontaktfläche des Gegenstandes (30) mit einer Unterlage ist.

3. Sensorsystem nach Anspruch 1 oder 2, **dadurch gekennzeichnet, daß** die Antennenanordnung (11) eine gemeinsame Antenne für Senden und Empfang umfaßt.

4. Sensorsystem nach einem der vorhergehenden Ansprüche, **dadurch gekennzeichnet, daß** Sensoren, die zur Erfassung einer gleichen physikalischen Größe dienen, in Umfangsrichtung des Gegenstandes (30) einen Abstand haben, der im wesentlichen der Ausdehnung des Teilbereichs (32) in Umfangsrichtung entspricht.

5. Sensorsystem nach einem der vorhergehenden Ansprüche, **dadurch gekennzeichnet, daß** die Sensoren eine Codierung aufweisen, die es ermöglicht, unter einer Mehrzahl von in dem Teilbereich (32) befindlichen Sensoren selektiv wenigstens einen Sensor mit Hochfrequenzenergie zu versorgen oder von wenigstens einem in dem Teilbereich befindlichen Sensor selektiv zu empfangen.

6. Sensorsystem nach Anspruch 5, **dadurch gekennzeichnet, daß** die Sensoren n Gruppen bilden, die jeweils zyklisch auf den Umfang des Gegenstandes (30) verteilt sind.

7. Sensorsystem nach Anspruch 6, **dadurch gekennzeichnet, daß** der Teilbereich so begrenzt ist, daß niemals Sensoren aller n Gruppen sich gleichzeitig darin befinden.

8. Sensorsystem nach einem der vorhergehenden Ansprüche, **dadurch gekennzeichnet, daß** jeder Sensor einen durch eine einer Trägerfrequenz der Hochfrequenzenergie aufmodulierte Meßfrequenz anregbaren ersten Resonator (5) aufweist, dessen Resonanzfrequenz in Abhängigkeit von der Meßgröße variabel ist.

9. Sensorsystem nach Anspruch 8, **dadurch gekennzeichnet, daß** der erste Resonator (5) einen Oberflächenwellenresonator oder einen Schwingquarz umfaßt.

10. Sensorsystem nach Anspruch 9, daß der erste Resonator (5) ferner ein für die Meßgröße sensitives diskretes Bauelement (6) umfaßt.

11. Sensorsystem nach einem der Ansprüche 5 bis 7 und einem der Ansprüche 8 bis 10, **dadurch gekennzeichnet, daß** jeder Kodierung ein spezifischer Resonator-Abstimmbereich entspricht.

12. Sensorsystem nach Anspruch 11, **dadurch gekennzeichnet, daß** die Resonator-Abstimmbereiche der einzelnen Kodierungen disjunkt sind.

13. Sensorsystem nach einem der vorhergehenden Ansprüche, **dadurch gekennzeichnet, daß** die Meßgröße eine vektorielle Größe, insbesondere eine Kraft oder Beschleunigung ist.

14. Sensorsystem nach Anspruch 13, **dadurch gekennzeichnet, daß** die Sensoren jeweils zur Erfassung von zwei zueinander senkrechten, zur Oberfläche des Gegenstandes tangentialen Komponenten der Meßgröße ausgelegt sind.

15. Sensorsystem nach einem der vorhergehenden Ansprüche, **dadurch gekennzeichnet, daß** der Gegenstand (30) ein Luftreifen ist.

16. Sensorsystem nach Anspruch 15, **dadurch gekennzeichnet, daß** es ferner einen einzelnen Sensor (36) für den Reifendruck aufweist.

17. Sensorsystem nach einem der vorhergehenden Ansprüche, **dadurch gekennzeichnet, daß** jeder Sensor einen durch eine Trägerfrequenz der Hochfrequenzenergie anregbaren zweiten Resonator (3) aufweist.

18. Sensorsystem nach Anspruch 17, **dadurch gekennzeichnet, daß** der zweite Resonator (3) ein Oberflächenwellen-Resonator ist.

19. Sensorsystem nach Anspruch 18, **dadurch gekennzeichnet, daß** der zweite Resonator (3) in der Lage ist, in Reaktion auf einen Anregungs-Schwingungspuls einen zeitlich verzögerten Ausgangs-Schwingungspuls zu erzeugen.

20. Sensorsystem nach Anspruch 19, **dadurch gekennzeichnet, daß** der zweite Resonator (3) eine Ausbreitungsstrecke (L) für die Oberflächenwelle aufweist, die von einer in dem zweiten Resonator (3) angeregten Oberflächenwelle zurückgelegt werden muß, bevor sie abgegriffen wird.

21. Sensorsystem nach Anspruch 19 oder 20, **dadurch gekennzeichnet, daß** der zweite Resonator (31) zwei räumlich beabstandete Paare (25,26) von Elektroden (21,22) aufweist.

22. Sensorsystem nach Anspruch 19 oder 20, **dadurch gekennzeichnet, daß** der zweite Resonator (3) ein Paar (27) von Elektroden (21,22) zum Anregen und Abgreifen einer Oberflächenwelle und von dem Elektrodenpaar (27) beabstandet angeordnete Reflektorelektroden (23) aufweist.

## Claims

1. Sensor system for detection of at least one measurement variable on a rotating object (30), having at least one sensor which is arranged on the rotating object (30) and is sensitive to the measurement variable, and having means for tapping off measurement signals from the at least one sensor and for passing on the signals to a processing device, which comprise an antenna arrangement (11) for supplying the at least one sensor with radio-frequency energy and for reception of a radio-frequency signal, which is modulated as a function of the variable to be detected, from the sensor, **characterized in that** a plurality of sensors such as these are arranged distributed in the circumferential direction on the object (30), and **in that** the antenna arrangement (11) has a directional characteristic (34) for transmission and/or reception, which is fixed in position with respect to a coordinate system which does not rotate with the object (30) and which includes only a subarea (32) of the rotating object (30).

2. Sensor system according to Claim 1, **characterized in that** the subarea is the contact surface of the object (30) with a substrate.

3. Sensor system according to Claim 1 or 2, **characterized in that** the antenna arrangement (11) has a common antenna for transmission and reception.

4. Sensor system according to one of the preceding claims, **characterized in that** sensors which are used for detection of the same physical variable are separated in the circumferential direction of the object (30) by a distance which corresponds essentially to the extent of the subarea (32) in the circumferential direction.

5. Sensor system according to one of the preceding claims, **characterized in that** the sensors have a coding which makes it possible to selectively supply radio-frequency energy to at least one sensor of a plurality of sensors which are located **in that** subarea (32), or receive selectively from at least one sensor which is located **in that** subarea.

6. Sensor system according to Claim 5, **characterized in that** the sensors form n groups which are each distributed cyclically on the circumference of the object (30).

7. Sensor system according to Claim 6, **characterized in that** the subarea is limited such that sensors of all n groups are never located in it at the same time.

8. Sensor system according to one of the preceding claims, **characterized in that** each sensor has a first resonator (5) which can be excited by a measurement frequency which is modulated onto a carrier frequency of the radio-frequency energy, and whose resonant frequency can be varied as a function of the measurement variable.

9. Sensor system according to Claim 8, **characterized in that** the first resonator (5) comprises a surface acoustic wave resonator or an oscillating crystal.

10. Sensor system according to Claim 9, **characterized in that** the first resonator (5) also has a discrete component (6) which is sensitive to the measurement variable.

11. Sensor system according to one of Claims 5 to 7 and one of Claims 8 to 10, **characterized in that** a specific resonator tuning range corresponds to each coding.

12. Sensor system according to Claim 11, **characterized in that** the resonator tuning ranges are disjunct from the individual codings.

13. Sensor system according to one of the preceding claims, **characterized in that** the measurement variable is a vectorial variable, in particular a force or acceleration.

14. Sensor system according to Claim 13, **characterized in that** the sensors are each designed to detect two mutually perpendicular components of the measurement variable which are tangential to the surface of the object.

15. Sensor system according to one of the preceding claims, **characterized in that** the object (30) is a pneumatic tyre.

16. Sensor system according to Claim 15, **characterized in that** the sensor system also has a single sensor (36) for the tyre pressure.

17. Sensor system according to one of the preceding claims, **characterized in that** each sensor has a second resonator (3) which can be excited by a carrier frequency of the radio-frequency energy.

18. Sensor system according to Claim 17, **characterized in that** the second resonator (3) is a surface acoustic wave resonator.

19. Sensor system according to Claim 18, **characterized in that** the second resonator (3) is able to produce a delayed output oscillation pulse in reaction to an excitation oscillation pulse.

20. Sensor system according to Claim 19, **characterized in that** the second resonator (3) has a propagation path (L) for the surface acoustic wave, which a surface acoustic wave that has been excited in the second resonator (3) must travel over before it is tapped off.

21. Sensor system according to Claim 19 or 20, **characterized in that** the second resonator (3) has two spatially separated pairs (25, 26) of electrodes (21, 22).

22. Sensor system according to Claim 19 or 20, **characterized in that** the second resonator (3) has a pair (27) of electrodes (21, 22) for excitation of and for tapping off a surface acoustic wave, and has reflector electrodes (23) which are arranged at a distance from the electrode pair (27).

## Revendications

1. Système de capteurs pour la détection d'au moins une grandeur de mesure sur un objet en rotation (30), comprenant au moins un capteur sensible à la grandeur de mesure, placé sur l'objet en rotation (30), et des moyens pour prélever des signaux de mesure du capteur et pour transférer les signaux, vers un dispositif de traitement qui comprend un dispositif d'antenne (11) pour alimenter en énergie à haute fréquence le capteur et pour recevoir du capteur un signal de haute fréquence modulé en fonction de la grandeur à détecter,
**caractérisé en ce que**
plusieurs capteurs de ce type sont disposés sur l'objet (30) et répartis sur la périphérie, et le dispositif d'antenne (11) a une directivité (34) pour l'envoi et/ou la réception qui est stationnaire par rapport à un système de coordonnées rotatif qui ne tourne pas avec l'objet (30) et qui inclut seulement une zone partielle (32) de l'objet (30) en rotation.

2. Système de capteurs selon la revendication 1,
**caractérisé en ce que**
la zone partielle est la surface de l'objet (30) en contact avec une base.

3. Système de capteurs selon la revendication 1 ou 2,
**caractérisé en ce que**
le dispositif d'antenne (11) comporte une antenne commune pour l'envoi et la réception.

4. Système de capteurs selon l'une quelconque des revendications précédentes,
**caractérisé en ce que**
les capteurs qui servent à détecter une même grandeur physique, présentent un écart dans le sens périphérique de l'objet (30) qui correspond essentiellement à l'allongement de la zone partielle (32) dans le sens périphérique.

5. Système de capteurs selon l'une quelconque des revendications précédentes,
**caractérisé en ce que**
les capteurs présentent un codage qui permet, parmi plusieurs capteurs se trouvant dans la zone partielle (32), d'alimenter en énergie à haute fréquence de manière sélective au moins un capteur ou de recevoir de manière sélective au moins un capteur se trouvant dans la zone partielle.

6. Système de capteurs selon la revendication 5,
**caractérisé en ce que**
les capteurs forment n groupes respectivement répartis de manière cyclique sur la périphérie de l'objet (30).

7. Système de capteurs selon la revendication 6,
**caractérisé en ce que**
la zone partielle est délimitée de telle sorte que jamais des capteurs de la totalité des n groupes ne s'y trouvent simultanément.

8. Système de capteurs selon l'une quelconque des revendications précédentes,
**caractérisé en ce que**
chaque capteur présente un premier résonateur (5) excitable par une fréquence de mesure modulée par une fréquence porteuse de l'énergie à haute fréquence, et dont la fréquence de résonance est variable selon la grandeur de mesure.

9. Système de capteurs selon la revendication 8,
**caractérisé en ce que**
le premier résonateur (5) comprend un résonateur d'ondes de surface ou un cristal oscillateur.

10. Système de capteurs selon la revendication 9,
**caractérisé en ce que**
le premier résonateur (5) comprend en outre un élément de construction discret sensible (6) pour la grandeur de mesure.

11. Système de capteurs selon l'une quelconque des revendications 5 à 7 et l'une quelconque des revendications 8 à 10,
**caractérisé en ce que**
chaque codage correspond à une gamme d'accord spécifique du résonateur.

12. Système de capteurs selon la revendication 11,
**caractérisé en ce que**
les gammes d'accord de résonateur des différents codages sont disjointes.

13. Système de capteurs selon l'une quelconque des revendications précédentes,
**caractérisé en ce que**
la grandeur de mesure est une grandeur vectorielle, en particulier une force ou une accélération.

14. Système de capteurs selon la revendication 13,
**caractérisé en ce que**
les capteurs sont conçus chacun pour la détection de deux composants de la grandeur de mesure perpendiculaires l'un à l'autre et tangentiels par rapport à la surface de l'objet.

15. Système de capteurs selon l'une quelconque des revendications précédentes,
**caractérisé en ce que**
l'objet (30) est un pneu.

16. Système de capteurs selon la revendication 15,
**caractérisé en ce qu'**
il présente en outre un capteur isolé (36) pour la pression du pneu.

17. Système de capteurs selon l'une quelconque des revendications précédentes,
**caractérisé en ce que**
chaque capteur présente un deuxième résonateur (3) excitable par une fréquence porteuse de l'énergie à haute fréquence.

18. Système de capteurs selon la revendication 17,
**caractérisé en ce que**
le deuxième résonateur (3) est un résonateur à ondes de surface.

19. Système de capteurs selon la revendication 18,
**caractérisé en ce que**
le deuxième résonateur (3) est en mesure de produire une impulsion oscillante de sortie à retardement en réaction à une impulsion oscillante d'excitation.

20. Système de capteurs selon la revendication 19,
**caractérisé en ce que**
le deuxième résonateur (3) présente une distance de propagation (L) pour l'onde de surface qui doit être parcourue par une onde de surface excitée dans le deuxième résonateur (3) avant d'être prélevée.

21. Système de capteurs selon la revendication 19 ou 20,
**caractérisé en ce que**
le deuxième résonateur (3) présente deux paires (25, 26) éloignées d'électrodes (21, 22).

22. Système de capteurs selon la revendication 19 ou 20,
**caractérisé en ce que**
le deuxième résonateur (3) présente une paire (27) d'électrodes (21, 22) pour l'excitation et le prélèvement d'une onde de surface, et des électrodes de réflecteur (23) écartées de la paire d'électrodes (27).
